# FASCICULE DE BREVET EUROPEEN

(11) **EP 1 174 784 B1**
(45) Date de publication et mention de la délivrance du brevet: **31.08.2005**
(21) Numéro de dépôt: 01401845.1
(22) Date de dépôt: 10.07.2001
(51) Int. Cl.: G05D 16/06, F16K 1/30, G05D 16/10

(54) **Robinet à détendeur intégré avec raccord unique d'entrée et sortie de fluide**
Integriertes Druckregelventil mit einem einzigen Einlass- und Auslassanschluss
Integrated pressure reducing valve having a single fitting for fluid inlet and outlet

(30) Priorité: 18.07.2000 FR 0009413
(43) Date de publication de la demande: 23.01.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Cannet, Gilles, 95620 Parmain (FR); Pisot, Philippe, 95590 Presles (FR)
(74) Mandataire: Pittis, Olivier

(56) Documents cités:
- EP-A- 0 275 242
- EP-A- 0 747 796
- WO-A-89/02047
- US-A- 5 465 754

## Description

La présente invention concerne le domaine des dispositifs de régulation de débit et de détente de fluide destinés à équiper les conteneurs de gaz, notamment les bouteilles de gaz.

Les dispositifs de régulation de débit et de détente de fluide sont généralement appelés robinets à détendeur intégré ou encore robinets-détendeur.

De tels robinets à détendeur intégré sont usuellement employés dans le domaine des gaz médicaux et des gaz industriels pour réguler le débit et la pression des fluides sous pression stockés dans des récipients adaptés, en particulier des bouteilles de gaz.

De tels robinets à détendeur intégré sont notamment décrits dans les documents suivants auxquels on peut se reporter pour information : EP-A-747796, EP-A-0275 242, US-A-5127436 et EP-A-0916891.

Tous ces dispositifs ont en commun qu'ils présentent une entrée pour le remplissage de la bouteille et une sortie pour le soutirage du gaz contenu dans la bouteille.

Classiquement, le problème majeur qui se pose avec les robinets à détendeur intégré est la réduction de leur poids et de leur encombrement, ce problème est d'autant plus crucial que la bouteille est petite.

En effet, les bouteilles de gaz étant assez lourdes à manipuler, on comprend aisément que le fait de rajouter sur la bouteille un robinet à détendeur intégré augmente encore d'autant le poids de la bouteille et, par là même, rend sa manipulation encore plus difficile.

Il est donc souhaitable d'essayer de réduire au maximum le poids et/ou l'encombrement des robinets à détendeur intégré.

Une solution incomplète à ces problèmes a été proposée par le document WO - A - 89/02047 qui décrit un robinet à détendeur intégré selon le préambule de la revendication 1. En effet, la solution proposée par ce document n'est pas totalement satisfaisante car elle ne prend pas en compte le problème de l'arrivée de fluide à haute pression, lors du remplissage, dans la Chambre basse pression.

Le but de la présente invention est alors de proposer un robinet à détendeur intégré amélioré dont le poids et dont l'encombrement soit simultanément réduits par rapport aux robinets connus, et qui soit, en outre, de mise en oeuvre aisée tant lors du remplissage d'une bouteille de gaz équipée d'un tel robinet à détendeur intégré amélioré que lors du soutirage du gaz contenu dans ladite bouteille.

L'invention concerne alors un robinet à détendeur intégré de fluide sous pression comportant un corps comprenant :
- un embout de fixation avec un premier passage interne de fluide permettant la fixation dudit corps sur un récipient de fluide,
- un raccord unique avec un deuxième passage interne de fluide par lequel le fluide peut entrer et/ou sortir du corps via le deuxième passage interne,
- lesdits premier passage et deuxième passage internes communiquant l'un avec l'autre par l'intermédiaire d'au moins un troisième passage interne de fluide et d'au moins une chambre basse pression située entre ledit deuxième passage et ledit un troisième passage, et
- des moyens de détente de fluide agencés dans le corps, sur ledit troisième passage interne de fluide, comportant :
   . un clapet de détente normalement repoussé contre un siège de clapet de détente pour commander la circulation du fluide dans ledit troisième passage de fluide, et
   . un ensemble de commande de clapet permettant de régler ou d'ajuster le décollement dudit clapet de détente dudit siège de clapet de détente en agissant sur ledit clapet de détente pour régler ou d'ajuster le niveau de pression de détente, caractérisé en ce que le deuxième passage comporte une chambre de régulation de la circulation de fluide, ladite chambre de régulation communiquant avec la chambre basse pression via un cinquième passage interne de fluide, et en ce qu'un premier clapet d'obturation mobile et normalement repoussé par un premier moyen à ressort contre un premier siège de clapet d'obturation formé dans une paroi de la chambre de régulation de manière à obturer au moins partiellement l'entrée du passage débouchant dans ladite chambre de régulation de fluide et à isoler ainsi la chambre du passage et de la chambre basse pression.

Selon le cas, le robinet de l'invention peut comprendre l'une ou plusieurs des caractéristiques suivantes :
- le premier siège de clapet d'obturation a une forme conique et le premier clapet d'obturation a une forme conique correspondante à celle du premier siège de clapet.
- il comporte, en outre, un quatrième passage interne de fluide reliant lesdits premier passage à ladite chambre de régulation de fluide, ledit quatrième passage comprenant un deuxième clapet d'obturation mobile et normalement repoussé par un deuxième moyen à ressort contre un deuxième siège de clapet d'obturation de manière à isoler la chambre de régulation du quatrième passage.
- le premier clapet d'obturation et le deuxième clapet d'obturation coopèrent l'un avec l'autre en étant mobiles axialement l'un par rapport à l'autre, de préférence le premier clapet d'obturation et le deuxième clapet d'obturation coulissent l'un dans l'autre tout en étant repoussés l'un de l'autre par un quatrième moyen à ressort.
- le clapet de détente est normalement repoussé contre un siège de clapet de détente pour isoler le troisième passage de fluide de la chambre basse pression située en aval dudit troisième passage.
- il comporte, par ailleurs, un levier actionnable par un opérateur et mobile entre au moins une position d'ouverture permettant la circulation du fluide depuis le premier passage vers le troisième passage, et une position de fermeture empêchant toute circulation de fluide depuis le premier passage vers le troisième passage, ledit levier agissant sur un troisième clapet d'obturation agencé entre le premier passage et le troisième passage.
- le clapet de détente est normalement repoussé contre le siège de clapet de détente par un troisième moyen à ressort et/ou par l'effet de la pression du gaz.
- le raccord unique est de type à connexion rapide de manière à permettre son raccordement à une prise de remplissage ou de soutirage de gaz sans nécessiter l'utilisation d'un outil spécifique, par exemple le raccord unique peut être adapté ou conformé pour permettre la fixation et la solidarisation de la prise par un simple emboîtement manuel.
- l'ensemble de commande de clapet comprend un ressort de détente dont la compression est réglable à l'aide d'un moyen à vis de détente se vissant dans un couvercle solidaire du corps, ledit vissage étant opéré par l'opérateur par l'intermédiaire d'un volant de manoeuvre coopérant avec ledit moyen à vis de détente.

L'invention porte aussi sur une bouteille de gaz équipée d'un tel robinet à détendeur intégré et sur l'utilisation d'un tel robinet à détendeur intégré ou d'une telle bouteille de gaz dans une opération de soudage, coupage ou traitement thermique, ou dans un bâtiment hospitalier, en particulier dans une salle de soins.

La solution de l'invention consiste donc à ne prévoir qu'un seul et unique accès, de préférence de type à raccord rapide, pour remplir la bouteille de gaz ou, à l'inverse, pour soutirer le gaz de la bouteille et l'envoyer ensuite vers son lieu d'utilisation, en général via une canalisation de gaz adaptée.

La présente invention va être mieux comprise au vu des figures annexées d'un mode de réalisation possible d'un robinet à détendeur intégré selon l'invention.

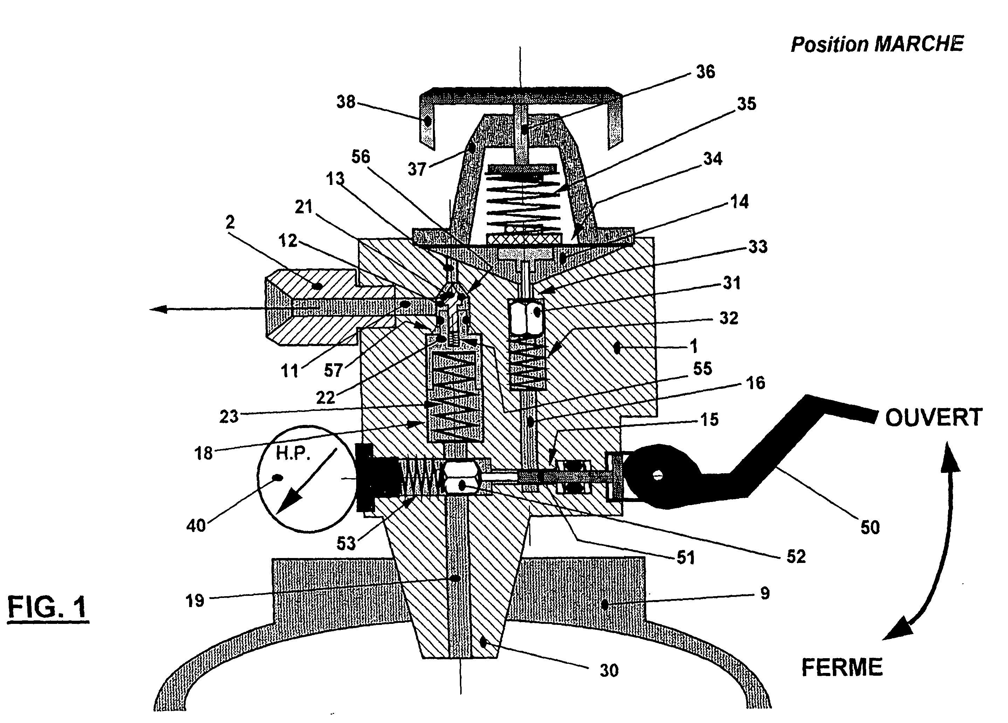

Les figures 1 à 3 montre un robinet à détendeur intégré selon l'invention comportant un corps 1 vissé par un embout de fixation fileté sur un récipient 9 de fluide, en particulier une bouteille de gaz.

Le corps 1 du robinet est percé de plusieurs passages 11, 15, 19 et 16 internes permettant de véhiculer le fluide sous pression dans ledit corps 1. Un embout 30 de fixation avec un passage 19 interne axial de fluide permet la fixation dudit corps 1 sur un récipient de fluide 9, par exemple par vissage, ledit embout 30 comportant un filetage sur sa paroi périphérique externe.

Plus précisément, le corps 1 de robinet comprend des moyens de détente de fluide, un raccord unique 2 d'entrée et sortie de fluide avec passage interne 11 et système d'aiguillage du flux entrant dans le corps 1 et allant vers la bouteille ou, à l'inverse, sortant de ladite bouteille et du corps 1, des moyens de commande et d'arrêt du débit de gaz, un manomètre indiquant la pression dans la bouteille 40 et un manomètre indiquant la pression de sortie (non représenté).

Les moyens de détente de fluide se composent notamment d'un clapet de détente 31 poussé par un ressort 32 contre un siège 33 taillé dans le corps 1 (ou rapporté en variante), un ensemble 34 pousse clapet avec un plateau de membrane et une membrane élastique tendant à ouvrir le clapet sous l'effet d'un ressort de détente 35 dont la compression est réglable à l'aide d'une vis de détente 36, se vissant dans un couvercle 37 solidaire du corps 1 et actionnée au moyen d'un volant 38.

En variante, la vis 36 peut-être préréglée au montage et non accessible à l'utilisateur ; elle peut même être supprimée si le détendeur est destiné à délivrer une pression fixe.

En variante, le détendeur comportant les éléments 31, 32, 33, 34, 35, 36, 37, 38, peut être de type à clapet dans la basse pression, tel que définit par le document de A. Baillon et R. Jurion ; Bulletin de la Société des Ingénieurs soudeurs, pages 1645-1661, 21 février 1935. Ce type de détendeur est largement utilisé dans les détendeurs et robinets détendeurs intégrés, notamment lorsque la pression délivrée n'est pas réglable.

Un passage interne 16 de gaz communique et alimente en gaz une chambre 14 basse pression située en aval du clapet 31 de détente.

Le corps 1 du robinet à détendeur intégré comporte un raccord 2 unique, pouvant y être fixé de façon étanche ou réalisé d'un seule pièce avec ledit corps, et communiquant avec un passage 11 interne de fluide pour permettre le passage du gaz. Le passage 11 alimente une chambre 12 au sein de laquelle est disposé un clapet 21 guidé dans un support 22. Le clapet 21 est poussé par un ressort 55 contre la paroi conique 56 supérieure de la chambre 12 faisant office de siège de clapet 21 et peut ainsi isoler la chambre 12 du passage 13 lui même communiquant avec la chambre basse pression 14.

Le support 22 du clapet 21, libre en translation, est poussé contre une zone d'étanchéité en bas de la chambre 12, par un ressort 23 et par la pression du gaz présent dans la chambre 18. La chambre 18 communique par le passage 19 avec l'intérieur de la bouteille 9 et, en outre, avec un manomètre 40 qui indique ainsi la pression régnant dans la bouteille 9.

Un clapet 52 normalement maintenu fermé par l'effet conjugué de la pression s'exerçant en son amont et d'un ressort 53, peut être ouvert par un poussoir 51 lui même activé par un levier 50 pouvant occuper deux positions stables (OUVERT / FERME).

En position OUVERT, le clapet 52 est ouvert et le passage 15 est mis en communication avec le passage 19 et le passage 15 communique lui même avec le passage 16 lequel alimente la chambre contenant le clapet de détente 32 et subséquemment la chambre basse pression 14.

En variante, le clapet 52 et ses moyens d'actionnement 51, 50 peuvent être remplacés par un dispositif plus classique d'interruption du passage de gaz comme décrit par exemple dans le document Welding Review International, août 1993, page 159.

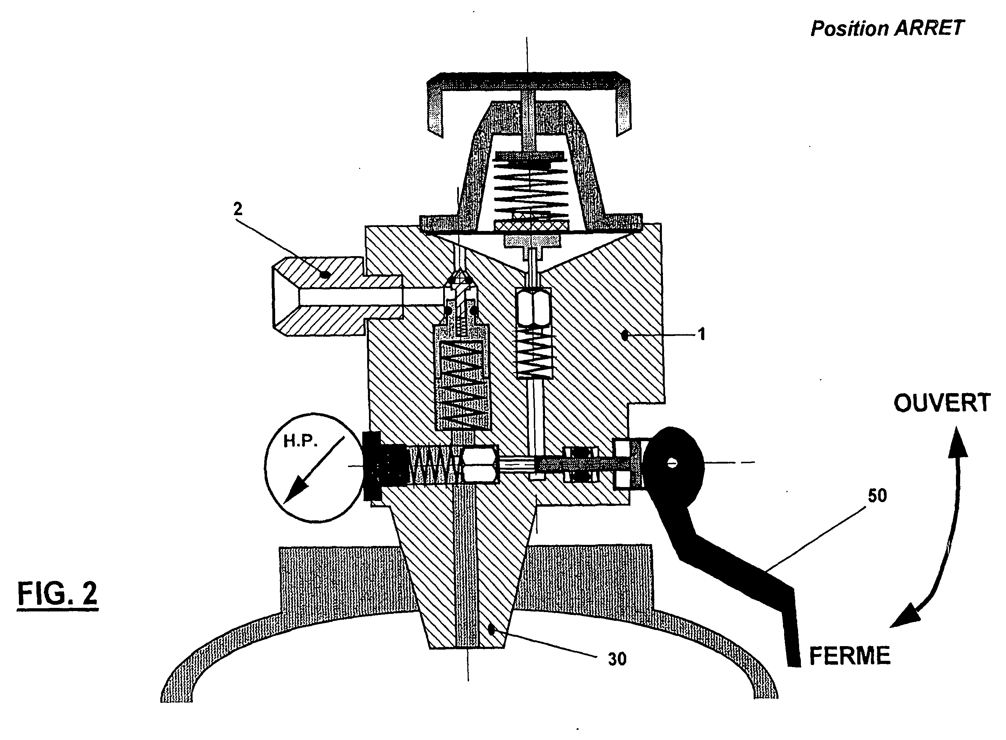

Lors du soutirage de gaz, le fonctionnement du dispositif est le suivant :
- en position MARCHE (Figure 1) : le support de clapet 22 empêche le gaz de passer de la chambre 18 à la chambre 12. Le levier 50 est placé en position OUVERT, le gaz contenu dans la bouteille peut circuler, via les passages 19, 15 et 16, vers le clapet de détente 32 poussé par l'ensemble de détente 34 jusqu'à ce que le gaz qu'il laisse échapper exerce une pression telle qu'elle équilibre la force exercée par le ressort 35 de détente sur le dit ensemble 34. Le gaz contenu dans la chambre basse pression 14, pousse le clapet 21 et peut sortir, via les passages 13 et 11, par le raccord 2 pour être utilisé avec une pression régulée. En cas de débit nul à travers le raccord 2 ou de légère surpression provenant de l'utilisation, le clapet 21 se referme assurant ainsi une fonction d'anti-retour et de retenue de pression.
- Position ARRET (Figure 2) : le levier 50 est placé en position FERME, le gaz n'alimente plus les moyens de détente, le débit de sortie s'annule, le clapet 21 assure ses fonctions de retenue de pression et d'anti-retour en allant assurer l'étanchéité au niveau de la paroi 56 conique formant siège de clapet. Si le raccord 2 est déconnecté du circuit d'utilisation, l'air ambiant ne peut pas venir polluer les circuits intérieurs du dispositif.

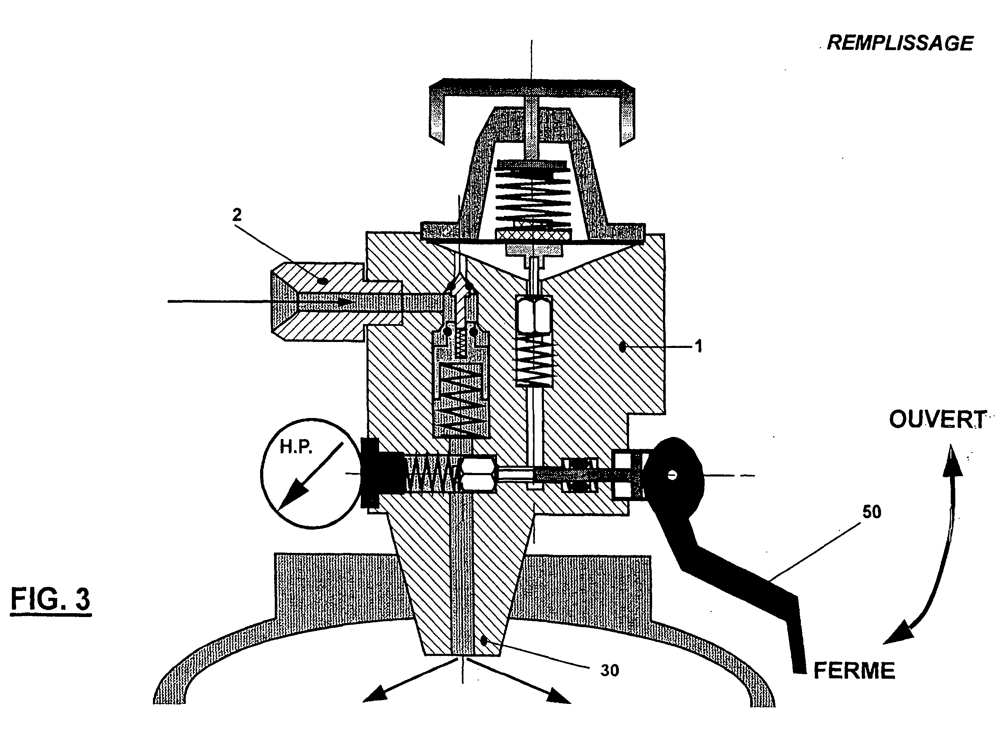

A l'inverse, lors du remplissage (Figure 3) de la bouteille 9, le corps 1 est raccordé via le raccord 2 à un circuit d'alimentation en fluide à haute pression. Cette haute pression parvenue dans la chambre 12, via le passage 11, plaque le clapet 21 contre son siège 56 conique, ce qui a pour effet d'isoler le circuit basse pression du détendeur (passage 13 et chambre 14) et simultanément, fait translater le support 22 en contre balançant la force exercée par son ressort 23. Le support 22 en quittant sa zone d'étanchéité dans la chambre 12 autorise la circulation du gaz vers la bouteille 9, via la chambre 18 et le passage 19, et donc le remplissage de celle-ci.

Lorsque la pression s'équilibre entre l'amont et l'aval du support 22, le ressort 23 fait revenir le support 22 en position d'étanchéité et le circuit de remplissage peut être débranché du raccord 2.

Pour faciliter remplissage et vidange, le raccord 2 est préférentiellement de type à connexion rapide, comme proposé par exemple par la Société STAUBLI™ ou proche du type normalisé par la norme EN 561, et d'une réalisation compatible avec les pressions de remplissage et les gaz utilisés.

La présente invention est applicable à tous les récipients, contenants ou bouteilles de gaz ou mélanges gazeux comprimés ou conditionnés sous pression en phase liquide ou autre.

## Revendications

1. Robinet à détendeur intégré de fluide sous pression comportant un corps (1) comprenant :
- un embout (30) de fixation avec un premier passage (19) interne de fluide permettant la fixation dudit corps (1) sur un récipient de fluide,
- un raccord unique (2) avec un deuxième passage (11) interne de fluide par lequel le fluide peut entrer et/ou sortir du corps (1) via le deuxième passage (11) interne,
- lesdits premier passage (19) et deuxième passage (11) internes communiquant l'un avec l'autre par l'intermédiaire d'au moins un troisième passage (16) interne de fluide et d'au moins une chambre (14) basse pression située entre ledit deuxième passage (11) et ledit un troisième passage (16), et
- des moyens de détente (31 à 37) de fluide agencés dans le corps (1), sur ledit troisième passage (16) interne de fluide, comportant:
. un clapet de détente (31) normalement repoussé contre un siège (33) de clapet de détente pour commander la circulation du fluide dans ledit troisième passage (16) de fluide, et
. un ensemble de commande de clapet (34, 35, 36, 37) permettant de régler ou d'ajuster le décollement dudit clapet (31) de détente dudit siège (33) de clapet de détente en agissant sur ledit clapet (31) de détente pour régler ou d'ajuster le niveau de pression de détente, **caractérisé en ce que** le deuxième passage (11) comporte une chambre (12) de régulation de la circulation de fluide, ladite chambre (12) de régulation communiquant avec la chambre basse pression (14) via un cinquième passage (13) interne de fluide, et **en ce qu'**un premier clapet (21) d'obturation mobile et normalement repoussé par un premier moyen à ressort (55) contre un premier siège de clapet (56) d'obturation formé dans une paroi de la chambre (12) de régulation de manière à obturer au moins partiellement l'entrée du passage (13) débouchant dans ladite chambre (12) de régulation de fluide et à isoler ainsi la chambre (12) du passage (13) et de la chambre (14) basse pression.

2. Robinet selon la revendication 1, **caractérisé en ce que** le premier siège de clapet (56) d'obturation a une forme conique et le premier clapet (21) d'obturation a une forme conique correspondante à celle du premier siège de clapet (56).

3. Robinet selon les revendications 1 ou 2, **caractérisé en ce qu'**il comporte, en outre, un quatrième passage (18) interne de fluide reliant lesdits premier passage (19) à ladite chambre (12) de régulation de fluide, ledit quatrième passage (18) comprenant un deuxième clapet (22) d'obturation mobile et normalement repoussé par un deuxième moyen à ressort (23) contre un deuxième siège de clapet (57) d'obturation de manière à isoler la chambre (12) de régulation du quatrième passage (18).

4. Robinet selon les revendications 1 à 3, **caractérisé en ce que** le premier clapet (21) d'obturation et le deuxième clapet (22) d'obturation coopèrent l'un avec l'autre en étant mobiles axialement l'un par rapport à l'autre, de préférence le premier clapet (21) d'obturation et le deuxième clapet (22) d'obturation coulissent l'un dans l'autre tout en étant repoussés l'un de l'autre par un quatrième moyen à ressort (55).

5. Robinet selon les revendications 1 à 4, **caractérisé en ce que** le clapet de détente (31) est normalement repoussé contre un siège (33) de clapet de détente pour isoler le troisième passage (16) de fluide de la chambre (14) basse pression située en aval dudit troisième passage (16).

6. Robinet selon les revendications 1 à 5, **caractérisé en ce qu'**il comporte, par ailleurs, un levier (50) actionnable par un opérateur et mobile entre au moins :
- une position d'ouverture permettant la circulation du fluide depuis le premier passage (19) vers le troisième passage (16), et
- une position de fermeture empêchant toute circulation de fluide depuis le premier passage (19) vers le troisième passage (16), ledit levier (50) agissant sur un troisième clapet (52) d'obturation agencé entre le premier passage (19) et le troisième passage (16).

7. Robinet selon les revendications 1 à 6, **caractérisé en ce que** le raccord unique (2) est de type à connexion rapide.

8. Robinet selon l'une des revendications 1 à 7, **caractérisé en ce que** le clapet de détente (31) est normalement repoussé contre le siège (33) de clapet de détente par un troisième moyen à ressort (32) et/ou par l'effet de la pression du gaz.

9. Bouteille de gaz équipée d'un robinet à détendeur intégré selon l'une des revendications 1 à 8.

10. Utilisation d'un robinet à détendeur intégré selon l'une des revendications 1 à 8 ou d'une bouteille de gaz selon la revendication 9 dans une opération de soudage, coupage ou traitement thermique, ou dans un bâtiment hospitalier, en particulier dans une salle de soins.

## Patentansprüche

1. Integriertes Druckregelventil für Druckfluid, das einen Körper (1) umfasst, aufweisend:
- einen Befestigungsstutzen (30) mit einem ersten innen liegenden Durchgang (19) für Fluid, welcher die Befestigung des Körpers (1) an einem Fluidbehälter ermöglicht,
- einen einzigen Anschluss (2) mit einem zweiten innen liegenden Durchgang (11) für Fluid, durch welchen das Fluid in den Körper (1) über den zweiten innen liegenden Durchgang (11) eintreten und/oder aus ihm austreten kann,
- wobei der erste innen liegende Durchgang (19) und der zweite innen liegende Durchgang (11) miteinander mittels mindestens eines dritten innen liegenden Durchgangs (16) für Fluid und mindestens einer Niederdruckkammer (14) kommunizieren, die sich zwischen dem zweiten Durchgang (11) und dem dritten Durchgang (16) befindet, und
- Druckminderungsmittel (31 bis 37) für Fluid, die in dem Körper (1) an dem dritten innen liegenden Durchgang (16) für Fluid angeordnet sind, umfassend:
- ein Druckminderungsventil (31), das normalerweise gegen einen Sitz (33) des Druckminderungsventils zurückgedrückt wird, um die Zirkulation des Fluids in dem dritten Durchgang (16) für Fluid zu steuern, und
- eine Ventilsteuereinheit (34, 35, 36, 37), welche es ermöglicht, das Ablösen des Druckminderungsventils (31) von dem Sitz (33) des Druckminderungsventils zu regulieren oder einzustellen, indem auf das Druckminderungsventil (31) eingewirkt wird, um den Druckminderungspegel zu regulieren oder einzustellen,
**dadurch gekennzeichnet, dass** der zweite Durchgang (11) eine Regulierungskammer (12) für die Fluidzirkulation umfasst, wobei die Regulierungskammer (12) mit der Niederdruckkammer (14) über einen fünften innen liegenden Durchgang (13) für Fluid kommuniziert, und **dadurch**, dass ein erstes Absperrventil (21), welches beweglich ist und normalerweise durch ein erstes Federmittel (55) gegen einen ersten Absperrventilsitz (56) zurückgedrückt wird, der in einer Wand der Regulierungskammer (12) dergestalt ausgebildet ist, dass der Einlass des Durchgangs (13) mindestens teilweise abgesperrt wird, welcher in die Regulierungskammer (12) für Fluid einmündet, und infolgedessen die Kammer (12) von dem Durchgang (13) und der Niederdruckkammer (14) trennt.

2. Ventil nach Anspruch 1, **dadurch gekennzeichnet, dass** der erste Absperrventilsitz (56) eine konische Gestalt aufweist und das erste Absperrventil (21) eine konische Gestalt aufweist, welche derjenigen des ersten Ventilsitzes (56) entspricht.

3. Ventil nach den Ansprüchen 1 oder 2, **dadurch gekennzeichnet, dass** es außerdem einen vierten innen liegenden Durchgang (18) für Fluid umfasst, welcher den ersten Durchgang (19) mit der Regulierungskammer (12) für Fluid verbindet, wobei der vierte Durchgang (18) ein zweites Absperrventil (22) aufweist, das beweglich ist und normalerweise durch ein zweites Federmittel (23) gegen einen zweiten Absperrventilsitz (57) dergestalt zurückgedrückt wird, dass die Regulierungskammer (12) von dem vierten Durchgang (18) getrennt wird.

4. Ventil nach den Ansprüchen 1 bis 3, **dadurch gekennzeichnet, dass** das erste Absperrventil (21) und das zweite Absperrventil (22) miteinander zusammenwirken, indem sie im Verhältnis zueinander axial beweglich sind, wobei vorzugsweise das erste Absperrventil (21) und das zweite Absperrventil (22) ineinander gleiten und dabei gleichzeitig durch ein viertes Federmittel (55) voneinander weggedrückt werden.

5. Ventil nach den Ansprüchen 1 bis 4, **dadurch gekennzeichnet, dass** das Druckminderungsventil (31) normalerweise gegen einen Sitz (33) des Druckminderungsventils zurückgedrückt wird, um den dritten Durchgang (16) für Fluid von der Niederdruckkammer (14) zu trennen, die stromabwärts des dritten Durchgangs (16) liegt.

6. Ventil nach den Ansprüchen 1 bis 5, **dadurch gekennzeichnet, dass** es außerdem einen Hebel (50) umfasst, welcher durch eine Bedienungsperson betätigt werden kann und beweglich ist zwischen mindestens:
- einer Öffnungsstellung, welche die Zirkulation des Fluids von dem ersten Durchgang (19) zu dem dritten Durchgang (16) ermöglicht, und
- einer Schließstellung, welche jegliche Zirkulation von Fluid von dem ersten Durchgang (19) zu dem dritten Durchgang (16) verhindert, wobei der Hebel (50) auf ein drittes Absperrventil (52) einwirkt, welches zwischen dem ersten Durchgang (19) und dem dritten Durchgang (16) angeordnet ist.

7. Ventil nach den Ansprüchen 1 bis 6, **dadurch gekennzeichnet, dass** der einzige Anschluss (2) von der Art einer Schnellverbindung ist.

8. Ventil nach einem der Ansprüche 1 bis 7, **dadurch gekennzeichnet, dass** das Druckminderungsventil (31) normalerweise durch ein drittes Federmittel (32) und/oder durch die Wirkung des Gasdrucks gegen den Sitz (33) des Druckminderungsventils zurückgedrückt wird.

9. Gasflasche, die mit einem integrierten Druckregelventil nach einem der Ansprüche 1 bis 8 ausgestattet ist.

10. Verwendung eines integrierten Druckregelventils nach einem der Ansprüche 1 bis 8 oder einer Gasflasche nach Anspruch 9 bei einem Schweiß-, Trenn-, oder Wärmebehandlungsvorgang, oder in einem Krankenhausgebäude, insbesondere in einem Behandlungszimmer.

## Claims

1. Integrated pressure-reducing valve for a pressurized fluid, comprising a body (1) comprising:
- a fixing adapter (30) with an internal first fluid passage (19) allowing the said body (1) to be fixed onto a fluid receptacle,
- a single coupling (2) with an internal second fluid passage (11) through which the fluid can enter and/or leave the body (1) via the internal second passage (11),
- the said internal first passage (19) and second passage (11) communicating with one another via at least an internal third fluid passage (16) and at least a low-pressure chamber (14) situated between the said second passage (11) and the said one third passage (16), and
- fluid-expansion means (31 to 37) arranged in the body (1) on the said internal third fluid passage (16), comprising:
• an expansion valve element (31) normally pushed back against an expansion valve seat (33) to control the flow of the fluid through the said third fluid passage (16), and
• a valve control assembly (34, 35, 36, 37) allowing the lifting of the said expansion valve element (31) off the said expansion valve seat (33) to be regulated or adjusted by acting on the said expansion valve element (31) so as to regulate or adjust the expansion pressure level,
**characterized in that** the second passage (11) comprises a chamber (12) for regulating the flow of fluid, the said regulating chamber (12) communicating with the low-pressure chamber (14) via an internal fifth fluid passage (13), and **in that** a first shut-off valve element (21) that is able to move and normally pushed back by a first sprung means (55) against a first shut-off valve seat (56) formed in a wall of the regulating chamber (12) so as to at least partially shut off the entry to the passage (13) opening into the said fluid regulating chamber (12) and as to thus isolate the chamber (12) from the passage (13) and from the low-pressure chamber (14).

2. Valve according to Claim 1, **characterized in that** the first shut-off valve seat (56) has a conical shape and the first shut-off valve element (21) has a conical shape corresponding to that of the first valve seat (56).

3. Valve according to Claims 1 or 2, **characterized in that** it further comprises an internal fourth fluid passage (18) connecting the said first passage (19) to the said fluid regulating chamber (12), the said fourth passage (18) comprising a second shut-off valve element (22) that is able to move and normally pushed back by a second sprung means (23) against a second shut-off valve seat (57) so as to isolate the regulating chamber (12) from the fourth passage (18).

4. Valve according to Claims 1 to 3, **characterized in that** the first shut-off valve element (21) and the second shut-off valve element (22) collaborate with one another, being able to move axially one with respect to the other; preferably the first shut-off valve element (21) and the second shut-off valve element (22) slide one inside the other while at the same time being pushed apart by a fourth sprung means (55).

5. Valve according to Claims 1 to 4, **characterized in that** the expansion valve element (31) is normally pushed back against an expansion valve seat (33) in order to isolate the third fluid passage (16) from the low-pressure chamber (14) situated downstream of the said third passage (16).

6. Valve according to Claims 1 to 5, **characterized in that** it furthermore comprises a lever (50) that can be operated by an operator and is able to move between at least:
- an open position allowing fluid to flow from the first passage (19) towards the third passage (16), and
- a closed position preventing any flow of fluid from the first passage (19) towards the third passage (16),
the said lever (50) acting on a third shut-off valve element (52) arranged between the first passage (19) and the third passage (16).

7. Valve according to Claims 1 to 6, **characterized in that** the single coupling (2) is of the quick-connection type.

8. Valve according to one of Claims 1 to 7, **characterized in that** the expansion valve element (31) is normally pushed back against the expansion valve seat (33) by a third sprung means (32) and/or by the effect of the pressure of the gas.

9. Gas cylinder equipped with an integrated pressure-reducing valve according to one of Claims 1 to 8.

10. Use of an integrated pressure-reducing valve according to one of Claims 1 to 8 or of a gas cylinder according to Claim 9 in a welding, cutting or heat treatment operation or in a hospital building, particularly in a treatment room.
